# EUROPEAN PATENT SPECIFICATION

(11) **EP 1 144 969 B1**
(45) Date of publication and mention of the grant of the patent: **08.09.2010**
(21) Application number: 99972434.7
(22) Date of filing: 06.12.1999
(51) Int. Cl.: G01K 11/32

(54) **STRAIN-ISOLATED BRAGG GRATING TEMPERATURE SENSOR**
SPANNUNGSISOLIERTER TEMPERATURSENSOR MIT EINEM BRAGG-GITTER
CAPTEUR DE TEMPERATURE A RESEAU DE DIFFRACTION DE BRAGG, ISOLE VIS A VIS DES CONTRAINTES

(30) Priority: 04.12.1998 US 205847; 20.09.1999 US 400364; 06.12.1999 US 455866
(43) Date of publication of application: 17.10.2001
(73) Proprietor: CiDra Corporation, Wallingford, CT 06492 (US)
(72) Inventor: WRIGHT, Christopher, J., Amston, CT 06231 (US); BAILEY, Timothy, J., Longmeadow, MA 01106 (US); FERNALD, Mark, R., Enfield, CT 06082 (US); SULLIVAN, James, M., East Hampton, CT 06424 (US); DAVIS, Michael, A., Glastonbury, CT 06033 (US); DUNPHY, James, R., South Glastonbury, CT 06073 (US); KERSEY, Alan, D., South Glastonbury, CT 06073 (US); PUTNAM, Martin, A., Cheshire, CT 06410 (US); BRUCATO, Robert, N., Waterbury, CT 06705 (US); SANDERS, Paul, E., Madison, CT 06443 (US)
(74) Representative: Hirsch, Peter
(86) International application number: PCT/US1999/028866
(87) International publication number: WO 2000/039548

(56) References cited:
- WO-A-98/31987
- US-A- 5 042 898
- SONG E A: "SIMULTANEOUS MEASUREMENT OF TEMPERATURE AND STRAIN USING TWO FIBER BRAGG GRATINGS EMBEDDED IN A GLASS TUBE" OPTICAL FIBER TECHNOLOGY,US,ACADEMIC PRESS, LONDON, vol. 3, no. 2, 1 April 1997 (1997-04-01), pages 194-196, XP002083806 ISSN: 1068-5200
- ANONYMOUS: "LES CAPTEURS A FIBRES OPTIQUES OPÉRATIONNELS?" MESURES REGULATION AUTOMATISME,FR,CFE. PARIS, vol. 51, no. 13, 20 October 1986 (1986-10-20), pages 49-51,53,55-, XP002083807 ISSN: 0755-219X

## Description

### Technical Field

This invention relates to fiber gratings, and more particularly to a tube-encased strain-isolated fiber grating temperature sensor.

### Background Art

It is known in the art of fiber optics that Bragg gratings embedded in an optical fiber may be embedded in a structure and used to sense parameters such as temperature and/or strain of the structure, such as is described in US Patent No.4,806,012, entitled "Distributed, Spatially Resolving Optical Fiber Strain Gauge", to Meltz et al, and US Patent No. 4,996,419, entitled "Distributed Multiplexed Optical Fiber Bragg Grating Sensor Arrangement", to Morey. It is also known that the reflection wavelength λ of the grating 12 changes with temperature (Δλ/ΔT) due to the change in refractive index and grating spacing over temperature, such as is described in US Patent No. 5,042,898, entitled "Incorporated Bragg Filter Temperature Compensated Optical Waveguide Device", to Morey et al.

However, when an optical fiber grating is used to measure solely temperature and it is not embedded within or bonded or attached to an overall structure being monitored, any strain on the fiber and grating cause the grating reflection wavelength to shift which can cause inaccuracies in the grating temperature measurement.

Song et al: "Simultaneous Measurement of Temperature and Strain Using Two Fiber Bragg Gratings Embedded in a Glass Tube", Optical Fiber Technology, US, Academic Press, London, Vol. 3, No. 2, 1 April 1977, pages 194-196, discloses an optical temperature sensor comprising an optical fiber having a Bragg grating acting as a temperature sensor being firmly glued to the inner wall of a glass tube using epoxy. It is mentioned in this document that the expansion of the Bragg grating might be affected by the thermal characteristic of the epoxy glue which would affect the exactness of the temperature measurement by the temperature sensor. Further, epoxy might break, in particular as a result of aging or under higher temperatures, and would allow the fiber to creep or even slip relative to the tube.

### Summary of the Invention

Objects of the present invention include provision of a fiber grating temperature sensor that allows the grating to be used as a high accuracy temperature sensor in the presence of strain on the optical fiber.

The present invention provides a strain-isolated fiber optic temperature sensor according to claim 1 and according to claim 22.

A strain-isolated fiber optic temperature sensor according to a first aspect of the invention comprises an optical sensing element having outer dimensions along perpendicular longitudinal and transverse directions, wherein the sensing element has an outer transverse dimension of at least 0.3 mm, said sensing element including a first optical fiber, having said reflective element embedded therein; and a tube, having said first optical fiber and said reflective element encased longitudinally therein, said tube being fused to at least a portion of said first optical fiber; and a second optical fiber extending longitudinally from at least one end of said sensing element; whereby said reflection wavelength changing due to a change in the temperature of said sensing element and not changing due to strain on said second optical fiber.

A strain-isolated fiber optic temperature sensor according to a second aspect of the invention comprises an optical sensing element including an optical waveguide having outer dimensions along perpendicular longitudinal and transverse directions, said optical waveguide having an outer cladding and an inner core disposed longitudinally therein and having a reflective element disposed in said inner core the optical waveguide having an outer transverse dimension of at least 0.3 mm; and an optical fiber extending longitudinally from at least one end of said sensing element and optically coupled to the inner core of the optical waveguide; whereby said reflection wavelength changing due to a change in the temperature of said sensing element and not changing due to strain on said optical fiber.

According to an embodiment of the present invention, the sensing element comprises: a tube being fused to at least a portion of an optical fiber along a longitudinal axis of the tube; a large diameter optical waveguide having an outer cladding and an inner core disposed therein; and the tube and the waveguide being axially fused and optically coupled together, and the reflective element is embedded either in the fiber and encased in the tube or is disposed in the optical waveguide. According further to the present invention, the sensing element is made of a glass material.

According to an embodiment of the present invention, a Bragg grating is disposed in an optical sensing element which includes an optical fiber fused to at least a portion of a glass capillary tube ("tube encased fiber/grating") and/or a large diameter waveguide grating having an optical core and a wide cladding, which senses temperature changes but is substantially not sensitive to (or substantially isolated from) strains on the element caused by the fiber or other effects. The element may be made of a glass material. Also, it allows the grating to be strain-isolated from strains elsewhere on the fiber.

Also, one or more gratings, fiber lasers, or a plurality of fibers or optical cores may be disposed in the element.

The grating(s) or laser(s) may be "encased" in the tube by having the tube fused to the fiber on the grating area and/or on opposite axial ends of the grating area adjacent to or a predetermined distance from the grating. The grating(s) or laser(s) may be fused within the tube or partially within or to the outer surface of the tube. Also, one or more waveguides and/or the tube encased fiber/gratings may be axially fused to form the sensing element.

Further, the invention may be used as an individual sensor or as a plurality of distributed multiplexed sensors. Also, the invention may be a feed-through design or a non-feed-through design.

The invention may be used in harsh environments, such as in oil and/or gas wells, engines, combustion chambers, etc. For example, the invention may be an all glass sensor capable of operating at high temperatures (>150 °C). The invention will also work equally well in other applications independent of the type of environment.

The foregoing and other objects, features and advantages of the present invention will become more apparent in light of the following detailed description of exemplary embodiments thereof.

### Brief Description of the Drawings

Fig. 1 is a side view of a tube-encased fiber grating temperature sensor, in accordance with the present invention.
Fig. 2 is a side view of a tube-encased fiber grating temperature sensor having more than one tube around the grating, in accordance with the present invention.
Fig. 3 is a side view of a tube-encased fiber grating temperature sensor where the tube is fused on opposite axial ends of the grating area, in accordance with the present invention.
Fig. 4 is a side view of an alternative tube-encased fiber grating temperature sensor where the tube is fused on opposite axial ends of the grating area, in accordance with the present invention.
Fig. 5 is a side view of a tube-encased fiber grating temperature sensor having more than one grating encased in the tube, in accordance with the present invention.
Fig. 6 is a side view of a plurality of tube-encased fiber grating temperature sensors in separate tubes connected in series by acommon optical fiber, in accordance with the present invention.
Fig. 7 is a side view of two fiber grating temperature sensors on two separate optical fibers encased in a common tube, in accordance with the present invention.
Fig. 8 is an end view of the embodiment of Fig. 7, in accordance with the present invention.
Fig. 9 is an end view of two fiber grating temperature sensors on two separate optical fibers encased in a common tube and separated by distance, in accordance with the present invention.
Fig. 10 is a side view of a tube-encased fiber grating temperature sensor where the tube is fused to the fiber only over the length of the grating, in accordance with the present invention.
Fig. 11 is a side view of a tube-encased fiber grating temperature sensor having a tunable DFB fiber laser encased in a tube, in accordance with the present invention.
Fig. 12 is a side view of a large diameter optical waveguide having a grating disposed therein, in accordance with the present invention.

### Best Mode for Carrying Out the Invention

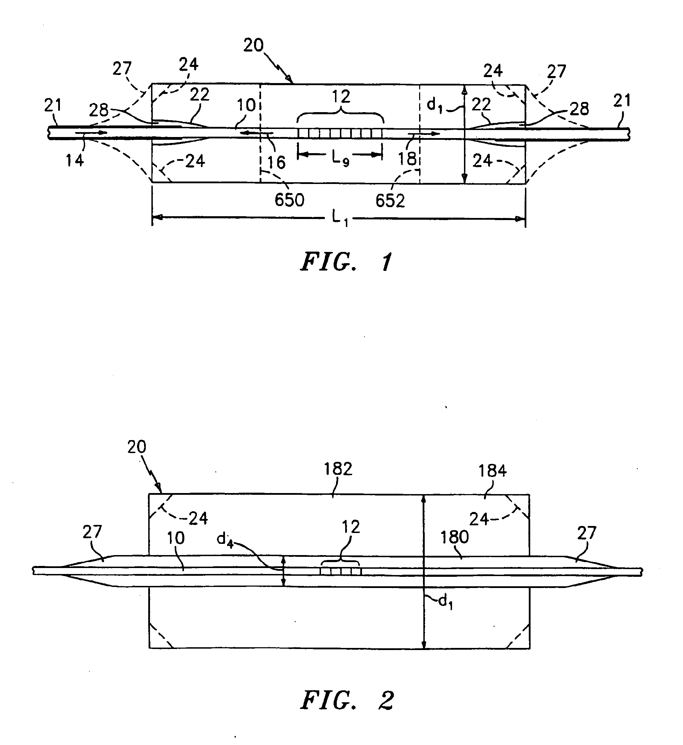

Referring to Fig. 1, a strain-isolated Bragg grating temperature sensor comprises a known optical waveguide 10, e.g., a standard telecommunication single mode optical fiber, having a Bragg grating 12 impressed (or embedded or imprinted) in the fiber 10. The fiber 10 has an outer diameter of about 125 microns and comprises silica glass (SiO₂) having the appropriate dopants, as is known, to allow light 14 to propagate along the fiber 10. The grating 12, as is known, is a periodic or aperiodic variation in the effective refractive index and/or effective optical absorption coefficient of an optical waveguide, such as that described in similar to that described in US Patent No. 4,725,110, and 4,807,950 entitled "Method for Impressing Gratings Within Fiber Optics", to Glenn et al; and US Patent No. 5,388,173, entitled "Method and Apparatus for Forming Aperiodic Gratings in Optical Fibers", to Glenn. However, any wavelength-tunable grating or reflective element embedded, etched, imprinted, or otherwise formed in the fiber 28 may be used if desired. As used herein, the term "grating" means any of such reflective elements. Further, the reflective element (or grating) 12 may be used in reflection and/or transmission of light.

Other materials and dimensions for the optical fiber or waveguide 10 may be used if desired. For example, the fiber 10 may be made of any glass, e.g., silica, phosphate glass, or other glasses, or made of glass and plastic, or solely plastic. For high temperature applications, optical fiber made of a glass material is desirable. Also, the fiber 10 may have an outer diameter of 80 microns or other diameters. Further, instead of an optical fiber, any optical waveguide may be used, such as, a multi-mode, birefringent, polarization maintaining, polarizing, multi-core, or multi-cladding optical waveguide, or a flat or planar waveguide (where the waveguide is rectangular shaped), or other waveguides. As used herein the term "fiber" includes the above described waveguides.

The light 14 is incident on the grating 12 which reflects a portion thereof as indicated by a line 16 having a predetermined wavelength band of light centered at a reflection wavelength λb, and passes the remaining wavelengths of the incident light 14 (within a predetermined wavelength range), as indicated by a line 18.

The fiber 10 with the grating 12 therein is encased within and fused to at least a portion of a cylindrical glass capillary tube 20 (discussed more hereinafter). The tube 20 has an outer diameter d1 of about 3 mm and a length L1 of about 10 mm. The grating 12 has a length Lg of about 5mm. Alternatively, the length L1 of the tube 20 may be substantially the same length as the length Lg of the grating 12, such as by the use of a longer grating, or a shorter tube. Other dimensions and lengths for the tube 20 and the grating 12 may be used. Also, the fiber 10 and grating 12 need not be fused in the center of the tube 20 but may be fused anywhere in the tube 20. Also, the tube 20 need not be fused to the fiber 10 over the entire length of the tube 20.

The tube 20 is made of a glass material, such as natural or synthetic quartz, fused silica, silica (SiO₂), Pyrex® by Coming (boro silicate), or Vycor® by Coming (about 95% silica and 5% other constituents such as Boron Oxide), or other glasses. The tube should be made of a material such that the tube 20 (or the inner diameter surface of a bore hole in the tube 20) can be fused to (i.e., create a molecular bond with, or melt together with) the outer surface (or cladding) of the optical fiber 10 such that the interface surface between the inner diameter of the tube 20 and the outer diameter of the fiber 10 become substantially eliminated (i.e., the inner diameter of the tube 20 cannot be distinguished from and becomes part of the cladding of the fiber 10).

For best thermal expansion matching of the tube 20 to the fiber 10 over a large temperature range, the coefficient of thermal expansion (CTE) of the material of the tube 20 should substantially match the CTE of the material of the fiber 10. In general, the lower the melting temperature of the glass material, the higher the (CTE). Thus, for a silica fiber (having a high melting temperature and low CTE) and a tube made of another glass material, such as Pyrex® or Vycor® (having a lower melting temperature and higher CTE) results in a thermal expansion mismatch between the tube 20 and the fiber 10 over temperature.

However, it is not required for the present invention that the CTE of the fiber 10 match the CTE of the tube 20. In particular, the more the CTE mismatch between the fiber 10 and the tube 20, the greater the sensitivity of grating reflection wavelength shift to temperature changes, and the more sensitive the temperature sensor becomes. For example, for a silica fiber (CTE= 5.5x10⁻⁷/°C), a tube 20 made of Vycor® (CTE= 7.5x10⁻⁷/°C) or Pyrex® (CTE= 32.5x10⁻⁷/°C) would provide greater sensitivity than a silica tube.

Instead of the tube 20 being made of a glass material, other elastically deformable materials may be used provided the tube 20 can be fused to the fiber 10. For example, for an optical fiber made of plastic, a tube made of a plastic material may be used.

With the fiber grating 12 encased in the tube 20, for any axial strain exerted on the tube 20 by the fiber 10 outside of the tube 20 the strain seen by the grating 12 in the tube 20 will be reduced by an amount related to the increased transverse cross-sectional area of the tube 20 as compared to the fiber 10, thereby providing a temperature sensor element that is substantially isolated from axial strain. Thus, any shift in the reflection wavelength of the grating 12 will be due to temperature change and not a fiber strain change. Accordingly, the diameter (or transverse dimension) and length L of the tube 20 is set to have the desired amount of isolation from the grating for a predetermined amount of strain on the element.

For example, if the sensing element is rigidly fixed and the optical fiber was axially pulled in a direction away from the element, the sensing element may be sized such that the fiber would exhibit strain but the grating in the element would not, and thus the grating wavelength would not change due to the strain on the fiber. A similar result would occur if the sensing element is not rigidly fixed and optical fibers exiting from both axial ends of the element are axially pulled in opposite directions away from the element. The invention will also provide strain isolation or reduction from other causes of axial strain exerted on the sensing element, such as mounting strains, etc.

The axial ends of the tube 20 where the fiber 10 exits the tube 20 may have an inner region 22 which is inwardly tapered (or flared) away from the fiber 10 to provide strain relief for the fiber 10 or for other reasons. In that case, an area 28 between the tube 20 and the fiber 10 may be filled with a strain relief filler material, e.g., polyimide, silicone, or other materials. Also, the tube 20 may have tapered (or beveled or angled) outer corners or edges 24 to provide a seat for the tube 20 to mate with another part (not shown) or for other reasons.

Alternatively, instead of having the inner tapered region 22, the axial ends of the tube 20 where the fiber 10 exits the tube 20 may have an outer tapered (or fluted, conical, or nipple) section, shown as dashed lines 27, which has an outer geometry that decreases down to the fiber 10 (discussed more hereinafter). We have found that using the fluted sections 27 provides enhanced pull strength at and near the interface between the fiber 10 and the tube 20, e.g., 6 lbf or more, when the fiber 10 is pulled along its longitudinal axis.

The tube 20 may have end (or transverse) cross-sectional shapes other than circular, such as square, rectangular, elliptical, clam-shell, or other shapes, and may have side-view cross-sectional shapes other than rectangular, such as circular, square, elliptical, clam-shell, or other shapes. Also, the tube 20 may have various different geometries, depending on the application. For example, the tube-encased fiber grating temperature sensor may be part of a larger sensor, such as a temperature-compensated pressure sensor, as is described in copending US Patent Application, Serial No. (CiDRA Docket No. CC-0036A), entitled "Tube-Encased Fiber Grating Pressure Sensor". Any varying geometry of the tube 20 may be formed as described in the copending US Patent Application, Serial No. (Cidra Docket No. CC-0078A), entitled "Tube-Encased Fiber Grating", which is incorporated herein by reference.

Where the fiber 10 exits the tube 20, the fiber 10 may have an external protective buffer layer 21 to protect the outer surface of the fiber 10 from damage. The buffer 21 may be made of polyimide, silicone, Teflon® (polytetraflouroethylene), carbon, gold, and/or nickel, and have a thickness of about 25 microns. Other thicknesses and buffer materials for the buffer layer 21 may be used. If the inner tapered axial region 22 is used and is large enough, the buffer layer 21 may be inserted into the region 22 to provide a transition from the bare fiber to a buffered fiber. Alternatively, if the region has the external taper 27, the buffer 21 would begin where the fiber exits the tube 20. If the buffer 21 starts after the fiber exit point, the fiber 10 may be recoated with an additional buffer layer (not shown) which covers any bare fiber outside of the fused region and overlaps with the buffer 21 and may also overlap some of the region 27 or the end of the tube 20.

The grating 12 may be impressed in the fiber 10 before or after the capillary tube 20 is encased around the fiber 10.

If the grating 12 is impressed in the fiber 10 after the tube 20 is encased around the grating 12, the grating 12 may be written through the tube 20 into the fiber 10 as is described in copending US Patent Application, Serial No. (Cidra Docket No. CC-0130), entitled "Method and Apparatus For Forming A Tube-Encased Bragg Grating", filed contemporaneously herewith.

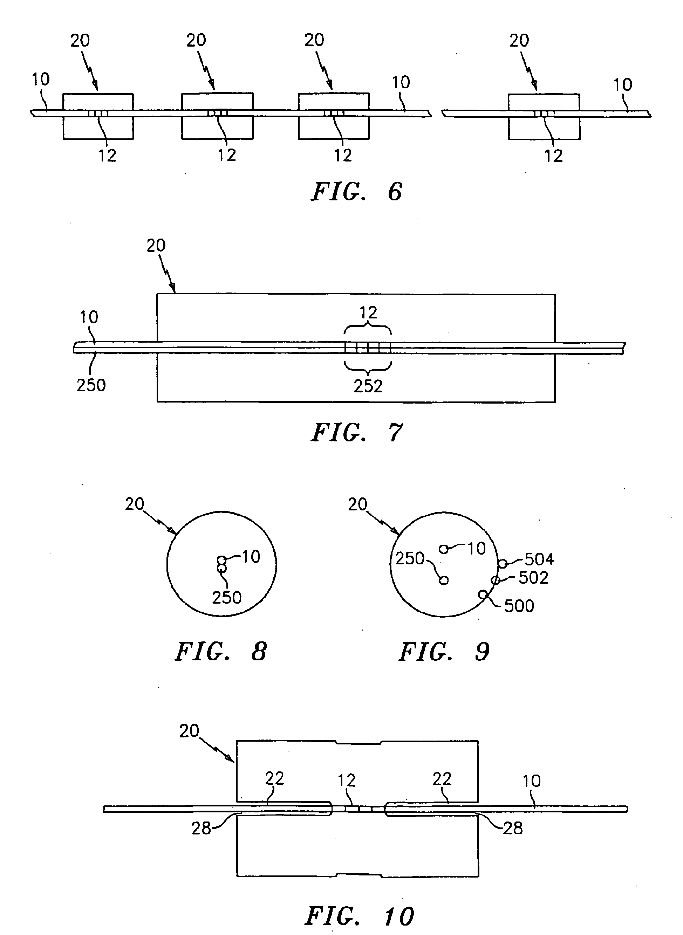

To encase the fiber 10 within the tube 20, the tube 20 may be heated, collapsed, and fused to the grating 12, by a laser, filament, flame, or by other fusing techniques, as is described in the aforementioned copending US Patent Application, Serial No. (Cidra Docket No. CC-0078A), entitled "Tube-Encased Fiber Grating", filed contemporaneously herewith. Other techniques may be used for collapsing and fusing the tubes 20 to the fiber 10, such as is discussed in US Patent No. 5,745,626, entitled "Method For And Encapsulation Of An Optical Fiber", to Duck et al., and/or US Patent No. 4,915,467, entitled "Method of Making Fiber Coupler Having Integral Precision Connection Wells", to Berkey. Alternatively, other techniques may be used to fuse the fiber 10 to the tube 20, such as using a high temperature glass solder, e.g., a silica solder (powder or solid), such that the fiber 10, the tube 20 and the solder all become fused to each other, or using laser welding/fusing or other fusing techniques. Also, the fiber may be fused within the tube or partially within or on the outer surface of the tube (discussed hereinafter with Fig. 9).

The grating 12 may be encased in the tube 20 having an initial pre-strain from the tube (compression or tension) or no pre-strain. For example, if Pyrex® or another glass that has a larger coefficient of thermal expansion than that of the fiber 10 is used for the tube 20, when the tube 20 is heated and fused to the fiber and then cooled, the grating 12 is put in compression by the tube 20. Alternatively, the fiber grating 12 may be encased in the tube 20 in tension by putting the grating intension during the tube heating and fusing process. Also, the fiber grating 12 may be encased in the tube 20 resulting in neither tension nor compression on the grating 12.

Referring to Fig. 2, more than one concentric tube may be fused together to form the tube 20 of the present invention. For example, a small inner capillary tube 180 having an outer diameter d4 of about 0.5 mm, may be located within a larger outer capillary tube 182, having the diameter d1 discussed hereinbefore, and the two tubes 180,182 are fused together. One or both ends of the small tube 180 may be shrunk down around the fiber 10 to form the fluted sections 27. Other values for the diameters d1, d4, of the inner and outer tubes 180,182, may be used if desired. Also, more than two concentric capillary tubes may be used. The material of the tubes may be the same to minimize thermal expansion mismatch over temperature.

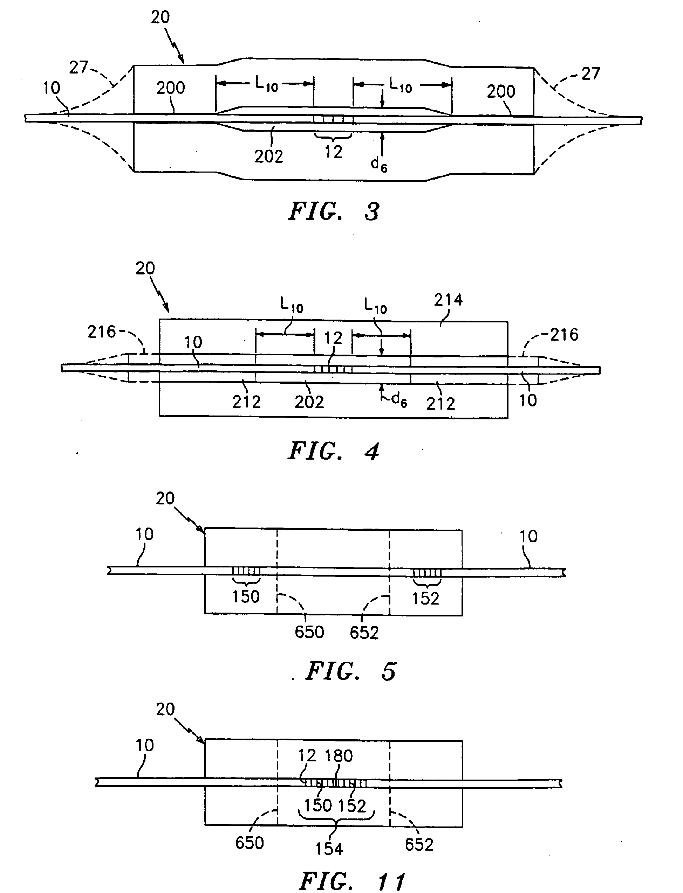

Referring to Figs. 3 and 4, alternatively, the tube 20 may be fused to the fiber 10 on opposite sides of the grating 12 adjacent to or a predetermined distance L10 from the grating 12, where L10 can be any desired length of at the edge of the grating 12 (L10 = zero). In particular, regions 200 of the tube 20 are fused to the fiber 10 and a central section 202 of the tube around the grating 12 is not fused to the fiber 10. The region 202 around the grating 12 may contain ambient air or be evacuated (or be at another pressure) or may be partially or totally filled with an adhesive, e.g., epoxy, or other filling material, e.g., a polymer or silicone, or another material. The inner diameter d6 of the tube 20 may be close to the fiber 10, e.g., about 0.01 to 10 microns larger than the diameter of the optical fiber 10, e.g., 125.01 to 135 microns or may have larger diameters, as it is not required to radially constrain the fiber 10 or grating 12 in the section 202 for temperature sensing. Moreover, the fiber 10 and grating 12 in the section 202 may be taught or may have some slack. Also, the distance L10 need not be symmetric around both sides of the grating 12. Referring to Fig. 4, alternatively, the same result as Fig. 3 can be achieved by fusing two separate tubes 210,212 on opposite sides of the grating 12 and then fusing an outer tube 214 across the tubes 210,212. Alternatively, the tubes 210,212 may extend beyond the ends of the outer tube 214 as indicated by the dashed lines 216 (axially extended sections). Alternatively, the tube 20 may be a single piece with a shape indicative of the tubes 212,214.

Referring to Fig. 5, for any of the embodiments described herein, instead of a single grating encased within the tube 20, two or more gratings 150,152 may be embedded in the fiber 10 that is encased in the tube 20. Such multiple gratings 150,152 may be used to measure the temperature at multiple points along the tube 20. In that case, the gratings 150,152 may have different reflection wavelengths λ1,λ2 and/or profiles, respectively.

Alternatively, the multiple gratings 150,152 may be used to sense temperature individually in a known Fabry Perot arrangement. Further, one or more fiber lasers, such as that described in US Patent No. 5,513,913, entitled "Active Multipoint Fiber Laser Sensor", US Patent No. 5,564,832, entitled "Birefringent Active Fiber Laser Sensor", or US Patent No. 5,666,372, "Compression Tuned Fiber Laser" may be embedded within the fiber 10 in the tube 20. In that case, the gratings 150,152 form a cavity and fiber 10 at least between the gratings 150,152 (and may also include the gratings 150,152 and/or the fiber 10 outside the gratings, if desired) would be doped with a rare earth dopant, e.g., erbium and/or ytterbium, and the lasing wavelength would shift as temperature changes.

Referring to Fig. 11, another type of tunable fiber laser that may be used is a tunable distributed feedback (DFB) fiber laser 154, such as that described in V.C. Lauridsen, et al, "Design of DFB Fibre Lasers", Electronic Letters, Oct. 15, 1998, Vol.34, No. 21, pp 2028-2030; P. Varming, et al, "Erbium Doped Fiber DGB Laser With Permanent π/2 Phaso-Shift Induced by UV Post-Processing", IOOC'95, Tech. Digest, Vol. 5, PD1-3, 1995; US Patent No. 5,771,251, "Optical Fibre Distributed Feedback Laser", to Kringlebotn et al; or US Patent No. 5,511,083, "Polarized Fiber Laser Source", to D'Amato et al. In that case, the grating 12 is written in a rare earth doped fiber and configured to have a phase shift of λ/2 (where λ is the lasing wavelength) at a predetermined location 180 near the center of the grating 12 which provides a well defined resonance condition that may be continuously tuned in single longitudinal mode operation without mode hopping, as is known. Alternatively, instead of a single grating, the two gratings 150,152 may be placed close enough to form a cavity having a length of (N + ½)λ, where N is an integer (including 0) and the gratings 150,152 are in rare-earth doped fiber.

Alternatively, the DFB laser 154 may be located on the fiber 10 between the pair of gratings 150,152 (Fig. 4) where the fiber 10 is doped with a rare-earth dopant along at least a portion of the distance between the gratings 150,152. Such configuration is referred to as an "interactive fiber laser", as is described by J.J. Pan et al, "Interactive Fiber Lasers with Low Noise and Controlled Output Power", E-tek Dynamics, Inc., San Jose, CA, internet web site www.etekcom/products/whitepapers. Other single or multiple fiber laser configurations may be disposed on the fiber 10 if desired.

Referring to Fig. 6, a plurality of the tubes/ temperature sensors 20 described herein, each having at least one grating 12 encased therein, may be connected in series by the common optical fiber 10 to measure multiple temperature points as distributed sensors. Any known multiplexing techniques may be used to distinguish one sensor signal from another sensor signal, such as wavelength division multiplexing (WDM) or time division multiplexing (TDM) or other multiplexing techniques. In that case, the grating 12 in each sensor may have a different reflection wavelength.

Referring to Figs. 7 and 8, alternatively, two or more fibers 10,250, each having at least one grating 12,252 therein, respectively, may be encased within the tube 20. In that case, the bore hole in the tube 20 prior to heating and fusing may be other than circular, e.g., square, triangle, etc. Also, the bore hole for the tube 20 need not be centered along the center line of the tube 20.

Referring to Fig. 9, which is no part of the present invention, instead of the fibers 10,250 touching each other as shown in Fig. 8, the fibers 10,250 may be spaced apart in the tube 20 by a predetermined distance. The distance may be any desired distance between the fibers 10,250. Also, for any of the embodiments shown herein, as discussed hereinbefore, part or all of an optical fiber and/or grating may be fused within, partially within, or on the outer surface of the tube 20, as illustrated by fibers 500,502,504, respectively.

Also, the grating(s) or laser(s) described herein may be oriented in any desired direction on the tube, e.g., longitudinally, radially, circumferentially, angled, curved, or other orientations. Also, the term "tube" as used herein may also mean a block of material having the properties described herein.

Referring to Fig. 10, alternatively, the tube 20 may be fused onto the fiber 10 only where the grating 12 is located. In that case, if the tube is longer than the grating 12, the inner tapered regions 22 discussed hereinbefore may exist and the areas 28 between the tube 20 and the fiber 10 may be filled with a filler material, as discussed hereinbefore.

The fluted sections 27 (Fig. 1) may be formed in various ways, such as is described in the aforementioned copending US Patent Application, Serial No. (Cidra Docket No. CC-0078A), entitled "Tube-Encased Fiber Grating". For example, by heating the tube 20 and pulling the tube and/or the fiber 10 or using other glass formation techniques such as grinding, polishing or etching the axial ends of the capillary tube 20. The sections 27 may be created before, during, or after the heating and fusing of the tube 20 to the fiber 10.

Also, the inner region 22 may be created by numerous techniques such as is described in the aforementioned copending US Patent Application, Serial No. (Cidra Docket No. CC-0078A), entitled "Tube-Encased Fiber Grating". For example, not fusing the tube 20 to the fiber 10 in the regions 22 or to create a region 22 that is larger than the inner diameter d6 of the tube 20, the tube 20 may be heated in the desired region to be expanded and internal pressure applied to the tube 20.

Further, for any of the embodiments shown herein, instead of the fiber 10 passing through the tube 20, the fiber 10 may be single-ended, i.e., only one end of the fiber 10 exits the tube 20. In that case, one end of the fiber 10 would be at the exit point of the fiber 10 from the tube 20 or prior to the exit point.

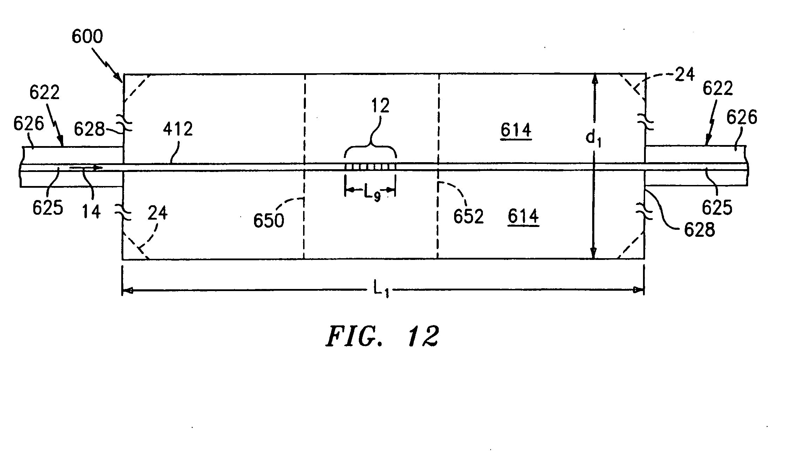

Referring to Fig. 12, alternatively, a portion of or all of the tube-encased fiber grating 20 may be replaced by a large diameter silica waveguide grating 600, such as that described in copending US 6 982 996 B , entitled "Large Diameter Optical Waveguide, Grating and Laser". The waveguide 600 has a core 612 (equivalent to the core of the fiber 10) and a cladding 614 (equivalent to the fused combination of the tube 20 and the cladding of the fiber 10) and having the grating 12 embedded therein. The overall length L1 of the waveguide 600 and the waveguide diameter d2 are set the same as that described hereinbefore for the tube 20 (i.e., such that the tube 20 will not buckle over the desired grating wavelength tuning range) and the outer diameter of the waveguide is at least 0.3 mm. An optical fiber 622 (equivalent to the fiber 10 in Fig. 1) having a cladding 626 and a core 625 which propagates the light signal 14, is spliced or otherwise optically coupled to one or both axial ends 628 of the waveguide 600 using any known or yet to be developed techniques for splicing fibers or coupling light from an optical fiber into a larger waveguide, that provides acceptable optical losses for the application.

The large diameter waveguide with grating 600 may be used in the same ways as the tube encased grating 20 is used herein where the fiber 10 is analogous to (and interchangeable with) the core 612 of the waveguide 600. All alternative embodiments described herein for the tube 20 and the tube-encased grating are also applicable to the waveguide 600 where feasible, including having a fiber laser or a DFB fiber laser, multiple fibers (or cores), various geometries, etc.

The tube-encased fiber grating 12 and the large diameter waveguide grating 12 may each also be referred to herein as an "optical sensing element". The tube-encased grating 12 and the large diameter waveguide grating 12 have substantially the same composition and properties in the locations where the tube 20 is fused to the fiber 10, because the end (or transverse) cross-section of the tube-encased grating 12 and the large diameter waveguide grating 12 are contiguous (or monolithic) and made of substantially the same material across the cross-section, e.g., a glass material, such as doped and undoped silica. Also, in these locations both have an optical core and a large cladding.

Also, the waveguide 600 and the tube-encased grating 12 may be used together to form any given embodiment of the sensing element described herein. In particular, one or more axial portion(s) of the sensing element may be a tube-encased grating or fiber and/or one or more other axial portion(s) may be the waveguide 600 which are axially spliced or fused or otherwise mechanically and optically coupled together such that the core of said waveguide is aligned with the core of the fiber fused to the tube. For example, a central region of the sensing element may be the large waveguide and one or both axial ends may be the tube-encased fiber which are fused together as indicated by dashed lines 650,652, or visa versa (Figs. 1,5,11,12).

It should be understood that the dimensions, geometries, and materials described for any of the embodiments herein, are merely for illustrative purposes and as such, any other dimensions, geometries, or materials may be used if desired, depending on the application, size, performance, manufacturing or design requirments, or other factors, in view of the teachings herein.

## Claims

1. A strain-isolated fiber optic temperature sensor, comprising:
an optical sensing element (10,20) having a longitudinal dimension (L1) and an outer transverse dimension (d1) perpendicular to the longitudinal dimension (L1), in at least a portion of the optical sensing element (10, 20), said outer transverse dimension (d1) being at least 0.3 mm, said sensing element (10,20) including:
an optical fiber (10), having at least a reflective element (12) embedded therein; and
a tube (20), having said optical fiber (10) and said reflective element (12) encased longitudinally therein, said tube (20) being fused to at least a portion of said optical fiber (10);
said optical fiber (10) exiting from both axial ends of said sensing element (10,20); and
whereby said reflection wavelength changing due to a change in the temperature of said sensing element (10,20) and not changing due to strain on said optical fiber (10).

2. The apparatus of claim 1 wherein said first optical fiber (10) and tube (20) is made of substantially the same material.

3. A strain-isolated fiber optic temperature sensor, comprising:
an optical sensing element (600), including:
an optical fiber (612, 614) having a longitudinal dimension (L1) and an outer transverse dimension (d1) perpendicular to the longitudinal dimension (L1), said optical fiber (612, 614) having an outer cladding (614) and an inner core (612) disposed longitudinally therein and having a reflective element (12) disposed in said inner core (612), the cladding (614) having an outer transverse dimension (d1) being at least 0.3 mm; and
whereby the reflection wavelength changes due to a change in the temperature of said sensing element (600) and not changing due to strain on said optical fiber (612, 614).

4. The apparatus of claim 1 wherein said strain-isolated fiber sensor comprises:
a large diameter optical waveguide (600) according to claim 3 and a tube-encased fiber (10,20) according to claim 1, said large diameter optical waveguide (600) and said tube-encased fiber (10,20) being connected longitudinally and optically coupled together.

5. The apparatus of claim 4, wherein said reflective element (12) is embedded in said tube-encased fiber (10,20) and encased in said tube (20) along said longitudinal axis of said tube (20).

6. The apparatus of claim 4, wherein said reflective element (12) is disposed in said optical waveguide (600).

7. The apparatus of claim 1 wherein said first fiber (10) and said tube (20) are made of a glass material.

8. The apparatus of claim 1, wherein said optical fiber (10) and said tube (20) are made of silica.

9. The apparatus of claim 1, wherein said optical fiber (10) and said tube (20) are made of materials with different coefficients of thermal expansion.

10. The apparatus of claim 1, wherein said tube (20) is fused to said optical fiber (10) where said reflective element (12) is located.

11. The apparatus of claim 1, wherein said tube (20) is fused to said optical fiber (10) on opposite sides of said reflective element (12).

12. The apparatus of claim 1 wherein at least a portion of said sensing element (10,20) has a cylindrical shape.

13. The apparatus of claim 1 wherein said sensing element (10,20) has at least one outer tapered axial section (27).

14. The apparatus of claim 1 wherein said sensing element (10,20) has at least one inner tapered axial section (28).

15. The apparatus of claim 1, wherein said tube (20) has a plurality of said optical fibers (10,250) encased in said tube (20).

16. The apparatus of claim 1, wherein said sensing element (10,20) has a plurality of reflective elements (150,152) disposed therein.

17. The apparatus of claim 1, wherein said sensing element (10,20) has at least one pair of reflective elements (150,152) disposed therein and at least a portion of said sensing element (10,20) is doped with a rare-earth dopant between said pair of reflective elements (150,152) to form a laser.

18. The apparatus of claim 15, wherein said laser lases at a lasing wavelength which changes as temperature of said tube (20) changes.

19. The apparatus of claim 1 or 3, wherein at least a portion of said sensing element (10,20) is doped with a rare-earth dopant where said reflective element (12) is located and said reflective element is configured to form a DFB laser.

20. The apparatus of claim 19, wherein said DFB laser lases at a lasing wavelength which changes as temperature of said sensing element changes.

21. The apparatus of claim 3 wherein said sensing element (600) is made of a glass material.

22. The apparatus of claim 3, wherein said sensing element (600) is made of silica.

23. The apparatus of claim 3 wherein at least a portion of said sensing element (600) has a cylindrical shape.

24. The apparatus of claim 1 or 3, wherein said sensing element (10, 20) has a plurality of optical cores (612, 250) or optical fibers (10), respectively disposed therein.

25. The apparatus of claim 3, wherein said sensing element (600) has a plurality of reflective elements disposed therein.

26. The apparatus of claim 3, wherein said sensing element (600) has at least one pair of reflective elements (150,152) disposed therein and at least a portion of said sensing element (600) is doped with a rare-earth dopant between said pair of reflective elements (150,152) to form a laser.

27. The apparatus of claim 26, wherein said laser lases at a lasing wavelength which changes as temperature of said optical waveguide (600) changes.

## Patentansprüche

1. Von mechanischer Spannung isolierter faseroptischer Temperatursensor, aufweisend:
ein optisches Fühlerelement (10, 20) mit einer Längsabmessung (L1) und einer äußeren Querabmessung (d1), die rechtwinklig zu der Längsabmessung (L1) ist, wobei die äußere Querabmessung (d1) zumindest eines Teils des optischen Fühlerelements (10, 20) mindestens 0,3 mm beträgt, wobei das Fühlerelement (10, 20) aufweist:
eine optische Faser (10) mit mindestens einem darin eingebetteten Reflexionselement (12); und
eine Röhre (20), von der die optische Faser (10) und das Reflexionselement (12) umhüllt sind, wobei die Röhre (20) an mindestens einen der Teil der optischen Faser (10) geschweißt ist;
wobei die optische Faser (10) aus beiden axialen Enden des Fühlerelements (10, 20) austritt; und
wobei sich die Reflexionswellenlänge infolge einer Änderung der Temperatur des Fühlerelements (10, 20) ändert und sich infolge einer mechanischen Spannung auf der optischen Faser (10) nicht ändert.

2. Vorrichtung nach Anspruch 1, wobei die erste optische Faser (10) und die Röhre (20) im Wesentlichen aus dem gleichen Material gemacht sind.

3. Von mechanischer Spannung isolierter faseroptischer Temperatursensor, aufweisend:
ein optisches Fühlerelement (600), aufweisend:
eine optische Faser (612, 614) mit einer Längsabmessung (L1) und einer äußeren Querabmessung (d1), die rechtwinklig zu der Längsabmessung (L1) ist, wobei die optische Faser (612, 614) einen äußeren Mantel (614) und einen längs darin angeordneten inneren Kern (612) sowie ein in dem inneren Kern (612) angeordnetes Reflexionselement (12) hat, wobei der Mantel (614) eine äußere Querabmessung (d1) von mindestens 0,3 mm hat; und
wobei sich die Reflexionswellenlänge infolge einer Änderung der Temperatur des Fühlerelements (600) ändert und sich infolge einer mechanischen Spannung auf der optischen Faser (612, 614) nicht ändert.

4. Vorrichtung nach Anspruch 1, wobei der von mechanischer Spannung isolierte Fasersensor aufweist:
einen optischen Wellenleiter (600) mit großem Durchmesser nach Anspruch 3 und eine von einer Röhre umhüllte Faser (10, 20) nach Anspruch 1, wobei der optische Wellenleiter (600) mit großem Durchmesser und die von einer Röhre umhüllte Faser (10, 20) in Längsrichtung verbunden und optisch miteinander gekoppelt sind.

5. Vorrichtung nach Anspruch 4, wobei das Reflexionselement (12) entlang der Längsachse der Röhre (20) in der von einer Röhre umhüllten Faser (10, 20) eingebettet ist und von der Röhre (20) umhüllt ist.

6. Vorrichtung nach Anspruch 4, wobei das Reflexionselement (12) in dem optischen Wellenleiter (600) angeordnet ist.

7. Vorrichtung nach Anspruch 1, wobei die erste Faser (10) und die Röhre (20) aus einem Material aus Glas gemacht sind.

8. Vorrichtung nach Anspruch 1, wobei die optische Faser (10) und die Röhre (20) aus Silica gemacht sind.

9. Vorrichtung nach Anspruch 1, wobei die optische Faser (10) und die Röhre (20) aus Materialien mit unterschiedlichen Koeffizienten thermischer Ausdehnung gemacht sind.

10. Vorrichtung nach Anspruch 1, wobei die Röhre (20) dort an die optische Faser (10) geschweißt ist, wo sich das Reflexionselement (12) befindet.

11. Vorrichtung nach Anspruch 1, wobei die Röhre (20) auf gegenüberliegenden Seiten des Reflexionselements (12) an die optische Faser (10) geschweißt ist.

12. Vorrichtung nach Anspruch 1, wobei mindestens ein Teil des Fühlerelements (10, 20) eine zylindrische Form hat.

13. Vorrichtung nach Anspruch 1, wobei das Fühlerelement (10, 20) mindestens einen äußeren spitz zulaufenden axialen Abschnitt (27) hat.

14. Vorrichtung nach Anspruch 1, wobei das Fühlerelement (10, 20) mindestens einen inneren spitz zulaufenden axialen Abschnitt (28) hat.

15. Vorrichtung nach Anspruch 1, wobei die Röhre (20) eine Mehrzahl der optischen Fasern (10, 250) hat, die von der Röhre (20) umhüllt sind.

16. Vorrichtung nach Anspruch 1, wobei das Fühlerelement (10, 20) eine Mehrzahl von darin angeordneten Reflexionselementen (150, 152) hat.

17. Vorrichtung nach Anspruch 1, wobei das Fühlerelement (10, 20) mindestens ein Paar darin angeordneter Reflexionselemente (150, 152) hat und mindestens ein Teil des Fühlerelements (10, 20) zwischen dem Paar Reflexionselemente (150, 152) mit einer Seltene Erde-Dotierungssubstanz dotiert ist, um einen Laser zu bilden.

18. Vorrichtung nach Anspruch 15, wobei der Laser mit einer Laserwellenlänge lasert, die sich ändert, wenn sich die Temperatur der Röhre (20) ändert.

19. Vorrichtung nach Anspruch 1 oder 3, wobei mindestens ein Teil des Fühlerelements (10, 20) mit einer Seltene Erde-Dotierungssubstanz dotiert ist, wo sich das Reflexionselement (12) befindet, und das Reflexionselement dafür konfiguriert ist, einen DFB-Laser (von englisch 'Distributed Feedback Laser': Laser mit verteilter Rückkopplung) zu bilden.

20. Vorrichtung nach Anspruch 19, wobei der DFB-Laser mit einer Laserwellenlänge lasert, die sich ändert, wenn sich die Temperatur des Fühlerelements ändert.

21. Vorrichtung nach Anspruch 3, wobei das Fühlerelement (600) aus einem Material aus Glas gemacht ist.

22. Vorrichtung nach Anspruch 3, wobei das Fühlerelement (600) aus Silica gemacht ist.

23. Vorrichtung nach Anspruch 3, wobei mindestens ein Teil des Fühlerelements (600) eine zylindrische Form hat.

24. Vorrichtung nach Anspruch 1 oder 3, wobei das Fühlerelement (10, 20) eine Mehrzahl von darin angeordneten optischen Kernen (612, 250) bzw. optischen Fasern (10) hat.

25. Vorrichtung nach Anspruch 3, wobei in dem Fühlerelement (600) eine Mehrzahl von Reflexionselementen angeordnet ist.

26. Vorrichtung nach Anspruch 3, wobei das Fühlerelement (600) mindestens ein Paar darin angeordneter Reflexionselemente (150, 152) hat und mindestens ein Teil des Fühlerelements (600) zwischen dem Paar Reflexionselemente (150, 152) mit einer Seltene Erde-Dotierungssubstanz dotiert ist, um einen Laser zu bilden.

27. Vorrichtung nach Anspruch 26, wobei der Laser mit einer Laserwellenlänge lasert, die sich ändert, wenn sich die Temperatur des optischen Wellenleiters (600) ändert.

## Revendications

1. Détecteur de température à fibre optique, isolé par rapport aux contraintes, comprenant :
un élément de détection optique (10, 20) possédant une dimension longitudinale (L1) et une dimension transversale externe (d1) perpendiculaire à la dimension longitudinale (L1), ladite dimension transversale externe (d1) s'élevant à au moins 0,3 mm dans au moins une portion de l'élément de détection optique (10, 20), ledit élément de détection (10, 20) englobant :
une fibre optique (10) dans laquelle est incorporé au moins un élément réfléchissant (12) ; et
un tube (20) dans lequel sont encastrés en direction longitudinale, ladite fibre optique (10) et ledit élément réfléchissant (12), ledit tube (20) étant fusionné à au moins une portion de ladite fibre optique (10) ;
ladite fibre optique (10) sortant par les deux extrémités axiales dudit élément de détection (10, 20) ; et
par lequel la longueur d'onde de réflexion subit une modification en fonction du changement de la température dudit élément de détection (10, 20) et ne subit aucune modification sous l'influence des contraintes s'exerçant sur ladite fibre optique (10).

2. Appareil selon la revendication 1, dans lequel ladite fibre optique (10) et le tube (20) sont constitués essentiellement de la même matière.

3. Détecteur de température à fibre optique, isolé par rapport aux contraintes, comprenant :
une fibre optique (612, 614) possédant une dimension longitudinale (L1) et une dimension transversale externe (d1) perpendiculaire à la dimension longitudinale (L1), ladite fibre optique (612, 614) possédant une gaine optique externe (614) et un coeur interne (612) qui y est disposé en direction longitudinale, et possédant un élément réfléchissant (12) disposé dans ledit coeur interne (612), la gaine optique (614) possédant une dimension transversale externe (d1) s'élevant à au moins 0,3 mm,
par lequel la longueur d'onde de réflexion subit une modification en fonction du changement de la température dudit élément de détection (600) et ne subit aucune modification sous l'influence des contraintes s'exerçant sur ladite fibre optique (612, 614).

4. Appareil selon la revendication 1, dans lequel ledit détecteur à fibre optique, isolé par rapport aux contraintes, comprend :
un guide d'onde optique à grand diamètre (600), selon la revendication 3, et une fibre (10, 20) encastrée dans un tube, selon la revendication 1, ledit guide d'onde optique à grand diamètre (600) et ladite fibre (10, 20) encastrée dans un tube étant connectés en direction longitudinale et couplés l'un à l'autre par voie optique.

5. Appareil selon la revendication 4, dans lequel ledit élément réfléchissant (12) est incorporé dans ladite fibre (10, 20) encastrée dans un tube et est encastré dans ledit tube (20) le long dudit axe longitudinal dudit tube (20).

6. Appareil selon la revendication 4, dans lequel ledit élément réfléchissant (12) est disposé dans ledit guide d'onde optique (600).

7. Appareil selon la revendication 1, dans lequel ladite fibre (10) et ledit tube (20) sont réalisés en une matière à base de verre.

8. Appareil selon la revendication 1, dans lequel ladite fibre (10) et ledit tube (20) sont réalisés en silice.

9. Appareil selon la revendication 1, dans lequel ladite fibre (10) et ledit tube (20) sont réalisés dans des matières possédant différents coefficients de dilatation thermique.

10. Appareil selon la revendication 1, dans lequel ledit tube (20) est fusionné à ladite fibre optique (10) à l'endroit où ledit élément réfléchissant (12) est disposé.

11. Appareil selon la revendication 1, dans lequel ledit tube (20) est fusionné à ladite fibre optique (10) sur les côtés opposés dudit élément réfléchissant (12).

12. Appareil selon la revendication 1, dans lequel au moins une portion dudit élément de détection (10, 20) possède une configuration cylindrique.

13. Appareil selon la revendication 1, dans lequel ledit élément de détection (10, 20) possède au moins une section axiale externe (27) de forme conique.

14. Appareil selon la revendication 1, dans lequel ledit élément de détection (10, 20) possède au moins une section axiale interne (28) de forme conique.

15. Appareil selon la revendication 1, dans lequel ledit tube (20) possède plusieurs fibres optiques en question (10, 250) à l'état encastré dans ledit tube (20).

16. Appareil selon la revendication 1, dans lequel ledit élément de détection (10, 20) possède plusieurs éléments réfléchissants (150, 152) qui y sont disposés.

17. Appareil selon la revendication 1, dans lequel ledit élément de détection (10, 20) possède au moins une paire d'éléments réfléchissants (150, 152) qui y sont disposés, au moins une portion dudit élément de détection (10, 20) étant dopée avec un dopant à base de terres rares entre ladite paire d'éléments réfléchissants (150, 152) pour former un laser.

18. Appareil selon la revendication 15, dans lequel ledit laser émet une lumière laser à une longueur d'onde d'émission de lumière laser qui subit une modification lorsque la température dudit tube (20) change.

19. Appareil selon la revendication 1 ou 3, dans lequel au moins une portion dudit élément de détection (10, 20) est dopée avec un dopant à base de terres rares à l'endroit où ledit élément réfléchissant (12) est disposé, ledit élément réfléchissant étant configuré pour former un laser à rétroaction distribuée.

20. Appareil selon la revendication 19, dans lequel ledit laser à rétroaction distribuée émet une lumière laser à une longueur d'onde d'émission de lumière laser qui subit une modification lorsque la température dudit élément de détection change.

21. Appareil selon la revendication 3, dans lequel ledit élément de détection (600) est réalisé en une matière à base de verre.

22. Appareil selon la revendication 3, dans lequel ledit élément de détection (600) est réalisé en silice.

23. Appareil selon la revendication 3, dans lequel au moins une portion dudit élément de détection (600) possède une configuration cylindrique.

24. Appareil selon la revendication 1 ou 3, dans lequel ledit élément de détection (10, 20) possède plusieurs coeurs optiques (612, 250) ou plusieurs fibres optiques (10), respectivement, qui y sont disposés.

25. Appareil selon la revendication 1, dans lequel ledit élément de détection (600) possède plusieurs éléments réfléchissants qui y sont disposés.

26. Appareil selon la revendication 3, dans lequel ledit élément de détection (600) possède au moins une paire d'éléments réfléchissants (150, 152) qui y sont disposés, au moins une portion dudit élément de détection (600) étant dopée avec un dopant à base de terres rares entre ladite paire d'éléments réfléchissants (150, 152) pour former un laser.

27. Appareil selon la revendication 26, dans lequel ledit laser émet une lumière laser à une longueur d'onde d'émission de lumière laser qui subit une modification lorsque la température dudit guide d'onde optique (600) change.
